# Europäisches Patentamt

## European Patent Office

## Office européen des brevets

(11) Veröffentlichungsnummer: **0 230 970**

**A2**

## EUROPÄISCHE PATENTANMELDUNG

(21) Anmeldenummer: **87100753.0**

(22) Anmeldetag: **21.01.87**

(51) Int. Cl.⁴: **C 09 D 5/34**
**C 09 K 3/10**

(30) Priorität: **29.01.86 DE 3602526**

(43) Veröffentlichungstag der Anmeldung:
**05.08.87 Patentblatt 87/32**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf-Holthausen (DE)**

(72) Erfinder: **Hartschen, Hans-Peter**
**Rott 151**
**D-4150 Krefeld (DE)**

**Möhker, Christian**
**Schadowstrasse 39**
**D-4000 Düsseldorf (DE)**

**Knop, Franz-Bernhard, Dr.**
**Robert-Koch-Strasse 10**
**D-4019 Monheim (DE)**

(54) **Fugendichtungsmasse auf Basis von thermoplastischen Elastomeren.**

(57) Fugendichtungsmasse auf Basis von Blockcopolymerisaten aus einem elastischen Mittelblock aus Polybutadien bzw. Polyisopren mit aufgepfropftem Polystyrol und einem Gehalt an Elastomeren und Lösungsmitteln sowie üblichen Hilfsstoffen (synthetischen Thermoplasten, Füllstoffen, Thixotropierungsmitteln, Haftvermittlern, Alterungsschutzmitteln u.a.m.), wobei die Mischung, bezogen auf die Gesamtmasse, 0,3 bis 25 Gew.-% eines Copolymerisats von Methacrylsäureestern von aliphatischen Monoalkoholen mit 1 bis 4 Kohlenstoffatomen enthält. Die Alkoholkomponente soll 1,5 bis 3,0 C-Atome im rechnerischen Durchschnitt enthalten und der molare Anteil an Methanol in dieser Alkoholkomponente soll wenigstens 25 % betragen. Das Copolymerisat von Methacrylsäureestern von aliphatischen Monoalkoholen soll eine reduzierte Viskosität von 20 bis 60 cm³/g, insbesondere 25 bis 40 cm³/g, gemessen bei 20 °C in Chloroform, aufweisen.

EP 0 230 970 A2

**Beschreibung**

## Fugendichtungsmasse auf Basis von thermoplastischen Elastomeren

Die vorliegende Erfindung betrifft Fugendichtungsmasse auf Basis von thermoplastischen Elastomeren, welche hergestellt sind aus elastischen Polybutadien bzw. Polyisopren, auf das Styrol aufgepfropft wurde und somit den Polymerisaten zusätzlich thermoplastische Eigenschaften verleiht.

Aus der Literatur sind thermoplastische Polymere bekannt, die als Blockcopolymere aufzufassen sind. Sie bestehen aus einem Mittelblock mit elastomeren Eigenschaften, der aus Butadien oder Isopren zusammengesetzt ist. Auf diesem Mittelblock werden dann als Endblock thermoplastische Vinylpolymerisate, insbesondere Styrol aufpolymerisiert. Das Elastizitätsverhalten derartiger Polymerer ist in bestimmten Temperaturbereichen von den Elastomereinheiten bestimmt, während andere Eigenschaften, insbesondere die thermoplastischen von dem aufgepfropften Styrol bestimmt werden.

Es wurde daher die Verwendung derartiger Polymerer, unter anderem auch für Fugendichtungsmasse, vorgeschlagen. Zur Modifizierung der Eigenschaften können dann diesen Fugendichtungsmassen noch Kohlenwasserstoffharze, alkylierte Kohlenwasserstoffharze, Terpenphenolharze und so weiter zugesetzt werden. Allerdings bedingen derartige modifizierende Zusätze häufig eine Verringerung der Stabilität in der ausgefüllten Fuge, und sie sind Dauerbelastungen nicht gewachsen.

Aufgabe der vorliegenden Erfindung war es nun, die bekannten thermoplastischen Elastomeren mit solchen Rohstoffen zu kombinieren, die in der Fugendichtungsmasse eine Haftverbesserung bewirken, aber nicht die bekannten Nachteile der bisher für diesen Zweck eingesetzten Harze aufweisen.

Die vorliegende Erfindung bezieht sich auf Fugendichtungsmassen auf Basis von Blockcopolymerisaten aus einem elastischen Mittelblock aus Polybutadien bzw. Polyisopren mit aufgepfropftem Polystyrol und einem Gehalt an Elastomeren und Lösungsmitteln sowie üblichen Hilfsstoffen wie synthetischen Thermoplasten, Füllstoffen, Thixotropierungsmitteln, Haftvermittlern, Alterungsschutzmitteln und dergleichen. Die neue Fugendichtungsmasse ist nun dadurch gekennzeichnet, daß die Mischung, bezogen auf die Gesamtmasse, 0,3 bis 25 Gew.-% eines Copolymerisates von Methacrylsäureestern von aliphatischen Monoalkoholen mit 1 bis 4 Kohlenstoffatomen enthält, wobei 1,5 bis 3,0 C-Atome im rechnerischen Durchschnitt in der Alkoholkomponente vorhanden sind und der molare Anteil an Methanol in der Alkoholkomponente wenigstens 25 % betragen sollte.

Als Grundbestandteil für die neuen Fugendichtungsmasse dienen thermoplastische Blockcopolymerisate aus einem elastischen Mittelblock aus Polybutadien bzw. Polyisopren mit aufgepfropftem Polystyrol, wie sie im Handel von verschiedenen Firmen angeboten werden. Sie unterscheiden sich graduell insbesondere in Lösung bezüglich ihrer Viskosität und den Fließeigenschaften, insbesondere wenn es sich um hochkonzentrierte Lösungen handelt. Als Lösungsmittel kommen hier Kohlenwasserstoffe wie Cyclohexan, Toluol oder auch Xylol oder Petrolether in Frage. Weitere Lösungsmittel sind Ketone wie Methylbutylketon oder Chlorkohlenwasserstoffe.

Weiterhin sollten die erfindungsgemäßen Fugendichtungsmassen neben den erwähnten Lösungsmitteln, welche in einer Menge zwischen etwa 20 und 50 Gew.-%, bezogen auf die Gesamtmischung, vorhanden sein können, noch weitere kautschukartige Polymere enthalten. Hier kommen relativ niedermolekulare, handelsübliche Typen von Polyisobutylen, Polyisopren oder auch Polybutadienstyrol in Frage. Auch die Mitverwendung von abgebautem Naturkauschuk oder von Neoprenkautschuk ist möglich. Hier können auch bei Raumtemperatur noch fließfähige Typen eingesetzt werden, welche häufig als "Flüssigkautschuk" bezeichnet werden. Die kautschukartigen Polymerisate sollen in einer Menge von etwa 30 bis 50 Gew.-%, bezogen auf die Gesamtmischung, vorliegen. Sie ist mit der Menge des thermoplastischen Elastomeren in geeigneter Form abzustimmen.

Als wesentlichen Bestandteil enthalten die erfindungsgemäßen Massen dann noch 0,3 bis 25 Gew.-% eines Copolymerisats von Methacrylsäureestern von aliphatischen Monoalkoholen, wie sie vorstehend beschrieben wurden. Vorzugsweise liegt die Menge der Methacrylsäureestercopolymerisate zwischen 3 bis 30 Gew.-%, insbesondere aber zwischen 5 und 12 Gew.-%, bezogen auf die Gesamtmasse. Bei den erwähnten Copolymerisaten der Methacrylsäureester handelt es sich ebenfalls um handelsübliche Produkte, die durch ihre reduzierte Viskosität von 20 bis 60 cm$^3$/g, insbesondere 25 bis 40 cm$^3$/g charakterisiert werden können. Die Messung der reduzierten Viskosität erfolgt bei 20 °C in Chloroform nach bekannten Methoden. Bereits sehr geringe Mengen der Methacrylsäureestercopolymerisate führen zu einer deutlich erkennbaren Adhäsion der erfindungsgemäßen Massen auch an glatten Oberflächen.

Wie bereits vorstehend erwähnt, können bzw. sollten weitere Hilfsstoffe zur Herstellung der Fugendichtungsmassen mitverwendet werden, wobei insbesondere auch die Mitverwendung von Thixotropierungsmitteln in einer Menge von 0,5 bis 5, insbesondere von 1 bis 4 Gew.-%, bezogen auf die Gesamtmasse, hingewiesen wird. Als Thixotropierungsmittel eignen sich die bekannten Thixotropierungsmittel wie Bentone, Kaoline oder auch organische Verbindungen wie hydriertes Rizinusöl bzw. Derivate desselben mit mehrfunktionellen Aminen oder die Umsetzungsprodukte von Stearinsäure oder Rizinolsäure mit Ethylendiamin. Als besonders günstig hat sich die Mitverwendung von Kieselsäure, insbesondere von Kieselsäure aus der Pyrolyse erwiesen.

Neben den Thixotropierungsmitteln können auch noch zusätzlich Haftvermittler eingesetzt werden wie etwa 0,01 bis 2 Gew.-%, bezogen auf die Gesamtmasse, eines Mercaptoalkylsilans. Hier hat es sich als zweckmäßig erwiesen, ein Monomercaptoalkyltrialkoxysilan einzusetzen. Handelsüblich ist beispielsweise das Mercaptopropyltrimethoxysilan.

Die erfindungsgemäßen Dichtungsmassen können verwendet werden, um die verschiedensten Materialien miteinander zu verbinden bzw. abzudichten. Hier ist in erster Linie an die Verwendung auf Beton, auf Glas, auf Putz und/oder Emaille sowie Keramik und Porzellan gedacht. Aber auch das Verbinden bzw. Abdichten von Formteilen bzw. Profilen aus Aluminium, Stahl, Zink oder auch aus Kunststoffen wie PVC oder Polyurethanen oder Acrylharzen ist möglich. Schließlich sei das Abdichten von Holz oder Holzmaterialien mit den verschiedensten anderen Werkstoffen erwähnt.

Die erfindungsgemäßen Massen haben sich besonders günstig zum Abdichten von silikatischen Materialien erwiesen wie etwa Glas, Keramik, Porzellan und/oder Emaille. Bei Glas beobachtet man beim Weglassen des erfindungsgemäßen Zusatzes einen ganz erheblichen Abfall des Elastizitätsmoduls sowie der Haftung auf der Glasoberfläche. Die Haftung geht praktisch völlig verloren, wenn man die Methacrylestercopolymerisate wegläßt. Durch geeignetes Abstimmen der Menge der Copolymerisate auf eine gegebene Grundmischung der anderen Rezepturbestandteile kann man eine gewünschte Haftung einstellen. Da die Kohäsion der Masse gut ist, kann die Variation der Menge Copolymerisat zu Dichtungsmitteln führen, die später wieder leicht entfernt werden können.

Beispiele

Beispiel 1

In einem Planetendissolver wurde eine Grundmischung hergestellt aus 300 Gew.-Teilen Toluol, 28O Gew.-Teilen eines Blockmischpolymerisats aus Polybutadien mit aufgepfropftem Polystyrol (Handelsprodukt Cariflex TR 1000) sowie 370 Gew.-Teilen Polyisobutylen (Handelsprodukt Oppanol B1). Dazu wurden gegeben 100 Gew.-Teile eines thermoplastischen Mischpolymerisats auf Basis von Methacrylsäuremethylester mit Methacrylsäurebutylester (reduzierte Viskosität 30 cm$^3$/g, gemessen in Chloroform bei 20 °C). Während des Mischens erwärmte sich die Masse auf 35 bis 40 °C.

Die vorstehend genannte Mischung wird bei der Wiedergabe der Meßwerte als Beispiel 1 bezeichnet.

Beispiel 2

Zur Grundmasse wurden noch 10 g Mercaptopropyltrimethoxysilan gegeben.

Beispiel 3

Zur Grundmischung des Beispiels 1 wurden noch 10 g Mercaptopropyltrimethoxysilan sowie 20 g pyrogene Kieselsäure (150 m$^2$/g, innere Oberfläche) gegeben.

Beispiel 4

Zur Grundmischung nach Beispiel 1 wurden noch 20 g pyrogene Kieselsäure wie im Beispiel 3 zugesetzt.

Aus den vorgenannten Mischungen wurden zur Bestimmung der Haftungswerte und des mechanischen Verhaltens an Kontaktkörpern aus Glas Probekörper hergestellt. Die Abmessungen der Probekörper wurden nach den heute für die Prüfung von Fugendichtungsmassen üblicherweise angewandte Testung (DIN 18545, Blatt 2) so gewählt, daß zwischen den Glaskörpern ein Volumen von 12 × 12 × 50 mm ausgefüllt war. Die so hergestellten Probekörper wurden unterschiedlichen Lagerbedingungen ausgesetzt:

a) Trocknung über 5 Wochen bei Normklima 23 °C ± 2 °C und 50 % ± 5 % Rel. Feuchte

b) Trocknung über 4 Wochen bei Normklima mit anschließend 1 Woche Lagerung bei +70 °C

c) Trocknung über 4 Wochen bei Normklima mit anschließend 1 Woche Wasserlagerung.

Von den so vorgelagerten Probekörpern wurde ein Teil aus der Normklimalagerung bis zum Bruch gedehnt, alle anderen wurden um 50 % gedehnt, wobei durch Einlegen von Abstandhaltern die Dehnung über 24 Stunden aufrechterhalten wurde. Nach dieser Zeit wurden die Fugendichtungsmassen auf das Haftungsverhalten (Adhäsion) und auf evtl. Materialbrüche (Kohäsion) untersucht.

Nach Beispiel 1 wurde ein Prüfkörper erhalten, der bei der Lagerung nach a) und b) einen E-Modul von 0,12 N/mm$^2$ hatte, während nach der Lagerung gemäß den Bedingungen c) der Wert bei 0,11 N/mm$^2$ lag, wobei Adhäsionsbruch beobachtet wurde. Gemäß Beispiel 2 wurde bei Lagerung nach a) und c) ein E-Modul von 0,11 N/mm$^2$ gemessen, wobei Adhäsionsbruch beobachtet wurde. Während bei der Lagerung gemäß b) der E-Modul 0,12 N/mm$^2$ betrug, ohne daß Bruch auftrat. Bei der Lagerung nach a) wurde die Bruchdehnung zu 349 % bestimmt, während der E-Modul dabei 0,34 N/mm$^2$ betrug.

Bei der Lagerung der Prüfkörper nach Beispiel 3 wurde unter den Lagerbedingungen nach a) und b) der E-Modul jeweils mit 0,11 N/mm$^2$ gemessen, ohne daß Bruch beobachtet wurde. Auch bei der Lagerung nach den Bedingungen gemäß b) wurde ohne Bruch ein E-Modul von 0,10 N/mm$^2$ gemessen.

Die Bruchdehnung an Prüfkörpern gemäß Lagerung a) ergab einen Wert von 382 %, während der E-Modul in diesem Fall auf 0,38 N/mm$^2$ anstieg.

Die Prüfkörper gemäß Beispiel 4 ergaben einen E-Modul bei der Lagerung unter den Bedingungen a) und b) von 0,12 N/mm$^2$, ohne daß ein Bruch auftrat. Die Bruchdehnung bei der Lagerung gemäß a) wurde zu 323 % bestimmt, während der E-Modul dann 0,34 N/mm$^2$ betrug.

Vergleichsversuche

Die Beispiel 2, 3 und 4 wurden wiederholt, jedoch ohne den erfindungsgemäßen Zusatz des Methacrylsäureestercopolymerisats. Dabei ergab sich bei den Lagerungen nach a), b) und c) entsprechend den Beispielen 2 und 3 ein E-Modul zwischen 0,05 und 0,04, während der Zusammensetzung analog Beispiel 4 keine Meßwerte für den E-Modul bei 50 % erhalten werden konnten, da bereits vorher Adhäsionsbruch auftrat. Das gleiche gilt für die Nacharbeitung des Beispiels 1 ohne den erfindungswesentlichen Zusatz. Auch hier konnte kein Meßwert für den E-Modul bei 50 % erhalten werden.

**Patentansprüche**

1) Fugendichtungsmasse auf Basis von Blockcopolymerisaten aus einem elastischen Mittelblock aus Polybutadien bzw. Polyisopren mit aufgepfropftem Polystyrol und einem Gehalt an Elastomeren und Lösungsmitteln sowie üblichen Hilfsstoffen wie synthetischen Thermoplasten, Füllstoffen, Thixotropierungsmitteln, Haftvermittlern, Alterungsschutzmitteln und dergleichen, dadurch gekennzeichnet, daß die Mischung, bezogen auf die Gesamtmasse, 0,3 bis 25 Gew.-% eines Copolymerisats von Methacrylsäureestern von aliphatischen Monoalkoholen mit 1 bis 4 Kohlenstoffatomen enthalten, wobei 1,5 bis 3,0 C-Atome im rechnerischen Durchschnitt in der Alkoholkomponente vorhanden sind und der molare Anteil an Methanol in der Alkoholkomponente wenigstens 25 % betragen soll.

2) Fugendichtungsmasse auf Basis von Blockcopolymerisaten aus einem elastischen Mittelblock aus Polybutadien bzw. Polyisopren mit aufgepfropftem Polystyrol nach Anspruch 1, dadurch gekennzeichnet, daß 3 bis 30 Gew.-%, insbesondere 5 bis 12 Gew.-%, bezogen auf die Gesamtmasse, des Copolymerisats von Methacrylsäureestern von aliphatischen Monoalkoholen mit 1 bis 4 Kohlenstoffatomen enthalten sind.

3) Fugendichtungsmasse nach Ansprüchen 1 und 2, dadurch gekennzeichnet, daß das Copolymerisat von Methacrylsäureestern von aliphatischen Monoalkoholen eine reduzierte Viskosität von 20 bis 60 cm$^3$/g, insbesondere 25 bis 40 cm$^3$/g, gemessen bei 20 °C in Chloroform, aufweist.

4) Fugendichtungsmasse nach Ansprüchen 1 bis 3, dadurch gekennzeichnet, daß sie, bezogen auf die Gesamtmasse, 0,5 bis 5, insbesondere 1 bis 4 Gew.-% an Thixotropierungsmittel, insbesondere Kieselsäure in Verbindung mit 0,01 bis 2 Gew.-% eines Mercaptoalkylsilans enthält.